# EUROPEAN PATENT SPECIFICATION

(11) **EP 1 424 247 B1**
(45) Date of publication and mention of the grant of the patent: **30.08.2006**
(21) Application number: 03257480.8
(22) Date of filing: 27.11.2003
(51) Int. Cl.: B60R 21/34, B62D 25/12

(54) **A safety arrangement**
Sicherheitsvorrichtung
Dispostif de sécurité

(30) Priority: 28.11.2002 GB 0227805
(43) Date of publication of application: 02.06.2004
(73) Proprietor: AUTOLIV DEVELOPMENT AB, 44783 Vargarda (SE)
(72) Inventor: Haglund, Lennart, 447 32 Vargada (SE)
(74) Representative: Frankland, Nigel Howard

(56) References cited:
- EP-A- 1 277 629
- EP-A- 1 350 693
- DE-A- 19 721 565
- US-B1- 6 415 882
- PATENT ABSTRACTS OF JAPAN vol. 2000, no. 02, 29 February 2000 (2000-02-29) & JP 11 310157 A (HONDA MOTOR CO LTD), 9 November 1999 (1999-11-09)
- PATENT ABSTRACTS OF JAPAN vol. 2000, no. 01, 31 January 2000 (2000-01-31) & JP 11 291948 A (HONDA MOTOR CO LTD), 26 October 1999 (1999-10-26)

## Description

**THE PRESENT INVENTION** relates to a safety arrangement and more particularly relates to a safety arrangement provided in a motor vehicle adapted to lift the rear part of the hood or bonnet of the vehicle in response to an impact or accident situation involving a pedestrian.

It has been proposed to provide a safety arrangement adapted to raise the rear part of the hood or bonnet of the motor vehicle in the event that an accident should occur in which a pedestrian is involved. The reason for lifting the rear part of the hood or bonnet is that, with the rear part of the hood or bonnet lifted, the entire bonnet is spaced from the underlying engine. The hood or bonnet may thus deform, whilst decelerating the body or head of the pedestrian, thus giving the head or body of the pedestrian a relatively slow deceleration. If the hood or bonnet were not lifted, and if the hood or bonnet deformed downwardly by even a short distance due to an impact with a pedestrian, that downward movement would soon terminate when the underside of the hood or bonnet impacted with the underlying engine. Thus the pedestrian would be decelerated very rapidly, possibly with fatal consequences.

Various proposals have been put forward as to mechanisms to achieve this objective, but it has been found difficult to provide a mechanism dimensioned to be located beneath the hood or bonnet, but which is capable of providing a sufficient degree of lift.

JP 11310157 discloses an impact absorbing device for a motor vehicle hood which comprises an actuator configured to lift the rear part of the hood. The actuator is coupled to a hinge mechanism in order to provide a desired lifting characteristic.

US 6,415,882 discloses device for raising the hood of a motor vehicle in the event of an accident in order to increase the amount of space between the hood and the engine according to the preamble of claim 1. This arrangement uses an actuator and is arranged so that, upon actuation of the actuator, a pivot pin 16 moves along the slot, the arrangement being configured so that in the event of subsequent downward impact to the bonnet, the sides of the slot are deformed around the pivot pin.

DE19721565 discloses another safety arrangement for lifting the hood of a motor vehicle, the arrangement being located at the front of the hood and being configured so as to allow a person manually to open the hood in order to gain access to the engine below it.

The present invention seeks to provide an improved safety arrangement.

According to this invention there is provided a safety arrangement, the safety arrangement incorporating a lifting unit, the lifting unit including a first element to be mounted in position in a motor vehicle and a second element, movable to a predetermined limited extent relative to the first element to increase the overall length of the lifting unit, characterised in that one of said elements is associated with a deformable member to be operatively positioned between the said one of the elements and part of the vehicle so that, in use, the momentum gained by the second element during its movement towards said limited extent is applied to the deformable member when the second element meets the limit of its movement to deform the member and hence increase the overall length of the lifting unit.

Preferably the first element is engaged by a mounting bracket to mount the unit in position, the mounting bracket being the deformable element and being formed at least partly of a deformable material such that, in use, the momentum causes the mounting bracket to deform.

Conveniently the mounting bracket is formed of a deformable metal and includes an initially planar region to which the first element is fixed and two lugs at opposed ends of that planar region, the lugs being provided with mounting apertures or recesses to mount the bracket in position, part of the mounting bracket adjacent the lugs being deformable.

Advantageously the mounting bracket has an initial planar portion of generally rectangular form, the lugs being provided at opposed ends of the rectangular planar portion and folded to lie under the rectangular planar portion, parts of the rectangular planar portion overlying the lugs being cut-away to provided access to the mounting apertures or recesses provided in the lugs.

Alternatively the deformable member is mounted to the movable element, between the movable element and a cap, there being a co-operating unit to be mounted on the vehicle, the cap and co-operating unit being engageable on actuation of the safety arrangement.

Conveniently the deformable element is in the form of a cup-shaped element, the side-wall of the cup-shaped element being a deformable side-wall.

In some embodiments of the invention the first element is an outer cylinder and the second element is a piston element movable relative to the cylinder.

Preferably the second element may tilt relative t the first element when the second element has moved relative to the first element.

In other embodiments of the invention the second element is connected to the first element by means of an inflatable sleeve.

Alternatively the second element is connected to the first element by means of an inflatable bellows.

Preferably the mounting bracket is formed of deformable metal and includes an initially planar region to which the first element is fixed and two lugs at opposed ends of the planar region, the lugs being provided with mounting apertures or recesses to mount the bracket in position, part of the mounting bracket adjacent the lugs being deformable.

Conveniently the mounting element has an initial planar portion of generally rectangular form, the lugs being provided at opposed ends of the rectangular planar portion and being folded to lie under the rectangular planar portion, parts of the rectangular planar portion overlying the lugs being cut away to provide access to the mounting apertures or recesses provided in the lugs.

Advantageously the first element is an outer cylinder and the second element is a piston element moveable relative tot he cylinder.

In one embodiment the piston element is a tubular piston.

Preferably the mounting bracket is provided at the bottom of the outer cylinder.

Conveniently the mounting bracket is provided at the top of the outer cylinder.

In one embodiment the lower end of the outer cylinder is provided with a gas generator housing, the gas generator housing having an inner guide tube extending upwardly within the outer cylinder, there being a tubular piston surrounding the guide tube and located within the outer cylinder.

Preferably the second element may tilt relative to the first element when the second element projects from the outer element.

Conveniently the arrangement to move the second element includes a gas generator to be actuated in response to an accident situation.

In order that the invention may be more readily understood, and so that further features thereof may be appreciated, the invention will now be described, by way of example, with reference to the accompanying drawings in which:
FIGURE 1 is a perspective view of lifting unit for use in a safety arrangement in accordance with the invention in an initial condition,
FIGURE 2 is a view corresponding to Figure 1 showing the unit during deployment thereof,
FIGURE 3 is a view corresponding to Figure 2 illustrating the unit when fully deployed,
FIGURE 4 is a perspective view of the mounting bracket used in the embodiments of Figures 1 to 3,
FIGURE 5 is an underneath view of the mounting bracket of Figure 4,
FIGURE 6 is a side view of the mounting bracket of Figure 4,
FIGURE 7 is a top plan view of the mounting of Figure 4,
FIGURE 8 is a sectional view of the alternative lifting unit for use in the invention using the mounting bracket of Figures 4 to 7,
FIGURE 9 is an enlarged view of part of the embodiment of Figure 8 in an initial condition,
FIGURE 10 is a view corresponding to Figure 9 showing that part of the embodiment of Figure 8 in a subsequent position,
FIGURE 11 is a view corresponding to Figure 8 showing the arrangement of that Figure in a final condition,
FIGURE 12 is a part sectional, part elevational view illustrating a further embodiment of the invention prior to use,
FIGURE 13 is a view corresponding to Figure 12 illustrating the embodiment at an intermediate stage during use,
FIGURE 14 is a view corresponding to Figure 13 illustrating the embodiment at a final stage during use,
FIGURE 15 is a part sectional, part elevational view of yet a further embodiment of the invention prior to use,
FIGURE 16 is a view corresponding to Figure 15 showing the embodiment at an intermediate stage during use,
FIGURE 17 is view corresponding to Figure 16 showing the embodiment at a final stage during use,
FIGURE 18 is a part sectional, part elevational view of yet another embodiment of the invention prior to use,
FIGURE 19 is a view corresponding to Figure 18 illustrating the embodiment at an intermediate stage during use, and
FIGURE 20 is a view corresponding to Figure 19 illustrating the embodiment at a final stage during use.

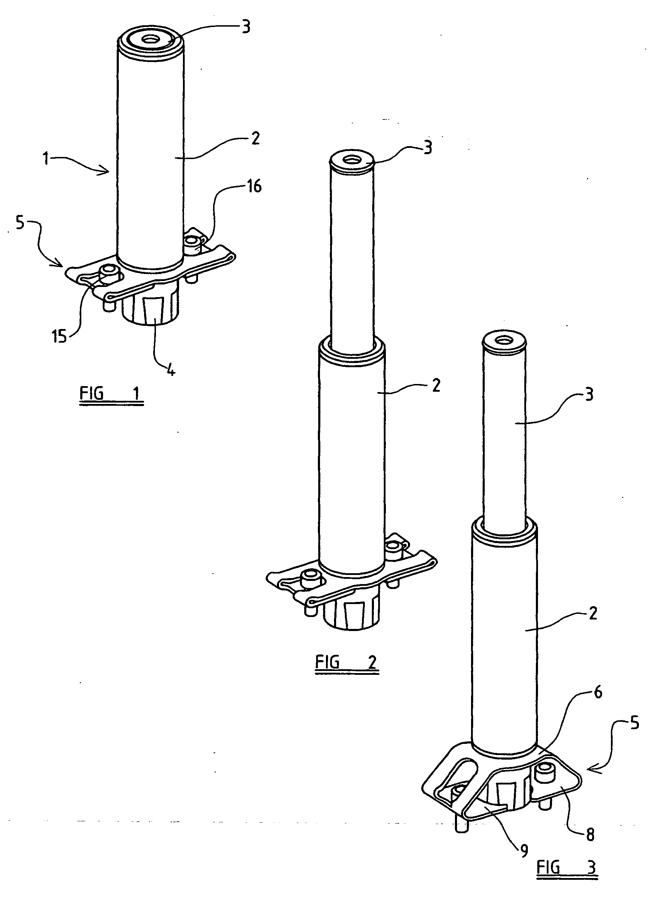

Referring initially to Figure 1 of the accompanying drawings a lifting unit 1 is illustrated, the lifting unit comprising a first element in the form of an outer cylinder 2 which telescopically receives an inner element 3 in the form of a piston which may be in the form of the second cylinder. The outer cylinder 2 is provided, at one end thereof, with a gas generator 4 adapted to generate gas in an appropriate accident situation. The inner element 3 may move to a predetermined limited extent relative to the outer cylinder 2 when the gas generator 4 generates gas.

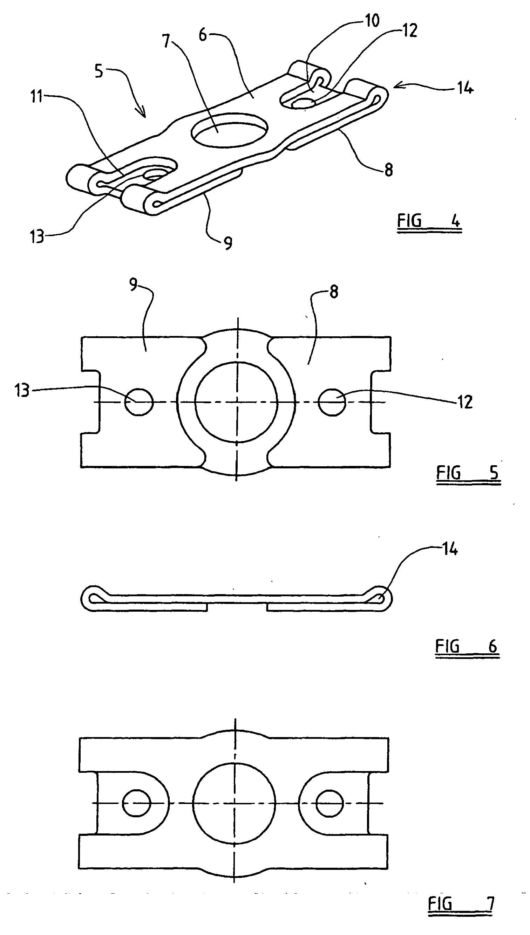

The lifting unit 1 is mounted in position by means of a mounting bracket 5, the mounting bracket 5 being shown more clearly in Figures 4 to 7. The mounting bracket is operatively positioned between the outer cylinder 2 and the motor vehicle.

The mounting bracket 5 is formed of a sheet of material, for example sheet steel, which is plastically deformable. The mounting bracket 5 has a main initially horizontal portion 6 provided with a central aperture 7, the aperture 7 being adapted to engage part of the lifting unit 1 between the outer cylinder 2 and the gas generator 4. The main planar region 6 is substantially rectangular, and at each end is provided with a folded tab 8, 9, the tabs being folded inwardly to lie underneath the main planar region 6. Parts of the planar region 10, 11 overlying the inwardly and underfolded tabs 8, 9 are cut away to reveal mounting apertures 12, 13 formed in the tabs.

As can be observed in Figure 4, the sheet metal, where the tabs 8, 9 are folded, it is not folded in a sharp crease, but instead is folded in a "roll" such as the roll 14.

It is to be appreciated that the mounting bracket 5 is initially mounted in position on the lifting unit 1 with the aperture 7 receiving part of the outer cylinder 2 in the region where the gas generator 4 is connected to the rest of the cylinder 2. Mounting bolts, such as the bolts 15, 16 as shown in Figure 1 pass through the cutaway regions 10, 11 and through the apertures 12, 13 provided in the tabs 8, 9 to secure the mounting bracket 5 to a motor vehicle. The lifting unit 1 can be mounted in position, for example, beneath the hood or bonnet of the vehicle. The upper part of the inner element 2 of the lifting unit 1 may be located immediately beneath the rear part of the hood or bonnet.

In response to a signal from an appropriate sensor the gas generator 4 generates gas causing the inner element 3 of the lifting unit to rise, as shown in Figure 2, with the inner element extending telescopically out of the outer cylinder 3 to a predetermined limited extent, so that the overall length (or in other words the overall height) of the lifting unit 1 increase. This will serve to lift the rear part of the hood or bonnet. However, as the inner element 3 moves so it gains momentum and, when the inner element 3 meets the limit of its movement relative to the cylinder 2, that momentum is imparted to the main cylinder 2. The momentum causes the bracket 5 to deform plastically so that the initially planar portion 6 assumes a "bridge" or arched configuration, as shown most clearly in Figure 3. The central part of the planar region 6 is still planar, but the end parts, which define the cutaway regions 10, 11 are now inclined upwardly towards the central part of the planar region. The net result, of course, is that the entire outer cylinder 2 has been lifted slightly and thus the top of the inner element 3 has also been lifted slightly. Thus the effective overall length (or height) of the lifting unit has been increased.

If a sufficient downward force is then applied to the hood or bonnet the mounting bracket 5 may be deformed, with the main cylinder moving downwardly, absorbing energy.

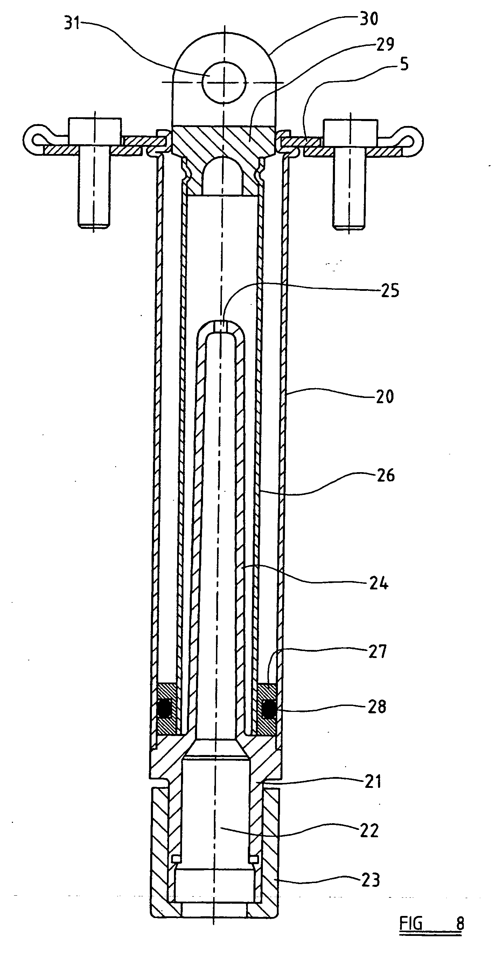

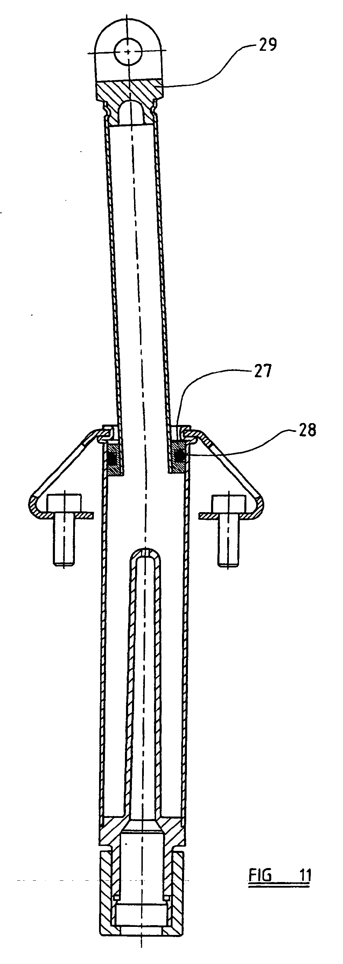

Whilst in the embodiment described with reference to Figure 1 to 7 the mounting bracket 5 is provided almost at the lowermost end of the lifting unit, in an alternative embodiment, as shown in Figure 8 to 12, the mounting bracket may be provided almost at the top of the lifting unit.

Thus, referring to Figure 8, a mounting bracket 5, of the type described above, is utilised to support the upper end of a first element in the form of an outer cylinder 20. The lower end of the outer cylinder 20 supports a housing 21, the housing 21 defining a chamber 22 which is dimensioned to receive a gas generator. A cap 23 is provided to retain the gas generator in position. Formed integrally with the housing 21 is an inner guide tube 24 which extends axially upwardly within the cylinder 20. The guide tube 24 terminates, at its upper end, with a gas outlet aperture 25.

The guide tube 24 is received within the interior of a second element in the form of a tubular piston 26. The tubular piston 26 is of hollow cylindrical form. At its lowermost end the outer wall of the cylindrical piston 26 is provided with an annular piston head 27, the outer periphery of the piston head incorporating a resilient sealing ring 28, such that the piston head 27 is a sliding sealing fit within the outer cylinder 20.

At its uppermost end the tubular piston 26 is sealed by an end plug 29. The plug 29 is provided with an upstanding lug 30 defining a horizontal aperture 31. A pivot pin may be received through the aperture 31 and part of the hood or bonnet may be pivotally mounted on the pivot pin.

The sealing plug 29 not only seals the upper end of the tubular piston 26, but also effectively seals the upper end of the outer cylinder 20, in a region where the wall of the cylinder is swaged inwardly to be received in the aperture 7 of the planar region 6 of the mounting bracket 5. Thus the plug 29 is held securely and firmly in position, ensuring that an adequate pivotal mounting is provided for the hood or bonnet.

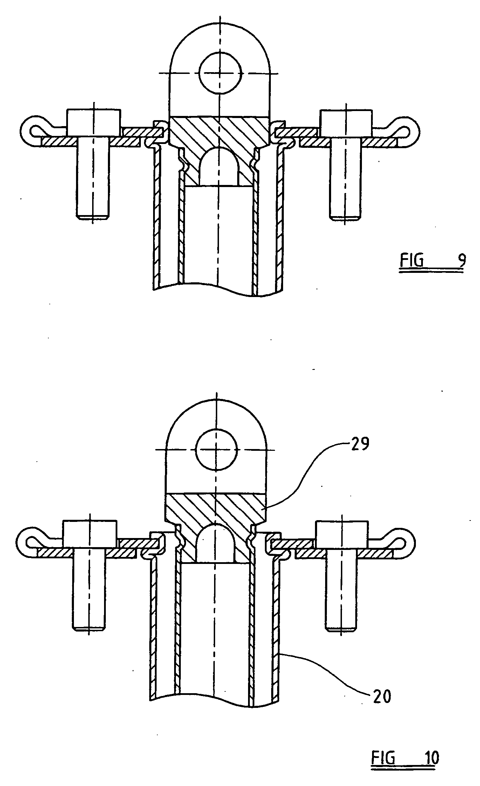

In response to an appropriate signal from a sensor of the gas generator will be actuated and gas will be guided through the inner guide tube 24 passing through the gas outlet aperture 25 into the interior of the hollow tubular piston 26. Consequently the piston 26 will move upwardly. As the tubular piston 26 begins to move so the upper sealing plug 29 moves away from the upper end of the outer cylinder 20, as shown in Figure 10, and the moving tubular piston 26 is then capable of tilting slightly from its initial substantially vertical position.

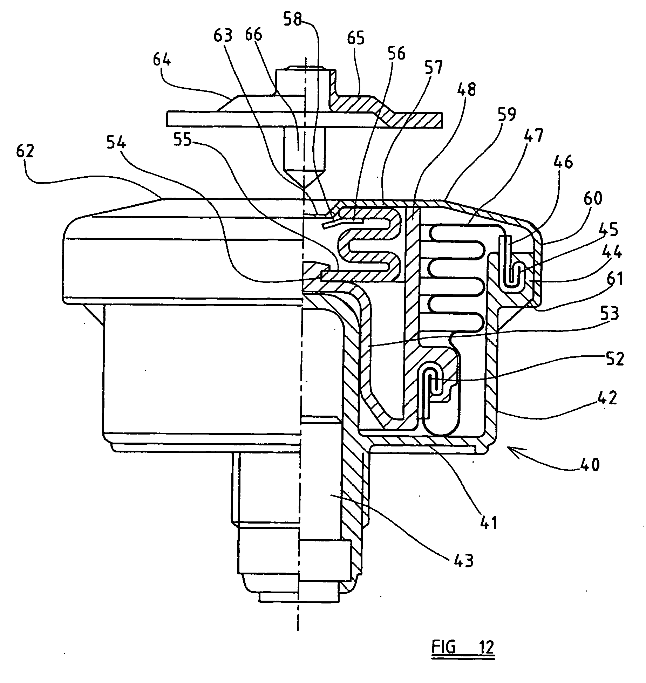

The tubular piston 26 will continue to move vertically until the piston head 27 engages the inwardly swaged upper end of the outer cylinder 20. This engagement defines a predetermined limit to the extent of movement of the tubular piston 26 relative to the outer cylinder 20. Thus the tubular piston 26 can move no further relative to the outer cylinder 20 but the momentum that was imparted to the tubular piston 26 by the gas will be transferred to the outer cylinder 20 and will cause the mounting bracket 5 to deform plastically, in the manner described above with reference to the embodiment of Figure 1 to 7. Thus, as can be seen from Figure 12, the entire outer cylinder 20 will rise slightly from its initial position, meaning that the sealing plug 29 will also be lifted by a small extra amount. Again the effective overall length (or height) of the lifting unit has been increased.

The gas pressure is maintained in the outer cylinder by the engagement of the piston head 27 sealingly with the interior of the outer cylinder 20. However, due to the resilient nature of the sealing ring 28, there is a possibility that the axis of the tubular piston 26 may be slightly offset from the axis of the outer cylinder 20. This may facilitate the opening of the hood or bonnet since the hood or bonnet is effectively pivoting about the front latch which normally secures the hood or bonnet in the closed position, with the rear part of the hood or bonnet effecting a virtual pivotal movement.

In this embodiment if the lug 30 and the plug 29 is subjected to a very substantial downward force the bracket 5 may re-deform back towards its initial position, again whilst absorbing energy.

Whilst the invention has been described above with reference to embodiments in which the lifting unit is of a telescopic nature, having an outer cylinder and an inner element telescopically received within the outer cylinder, it is to be understood that the invention is not limited to lifting units of this particular type, and is applicable to lifting units which incorporate an inflatable sleeve or inflated bellows.

Referring, for example, to Figures 12 to 14 in a further embodiment of the invention, a first element 40 in the form of a base housing is provided. The first element defines a housing of cup-like form having a planar base wall 41 surrounded by a peripheral upstanding side-wall 42. The base wall 41 carries, at a central position, a gas generator 43 which extends upwardly into the cup-like housing 40. The peripheral side-wall 42 has an enlarged upper lip 44 which defines a recess 45. Retained within the recess 45 is a bead 46 provided at one end of a conical inflatable sleeve 47 that may be formed of fabric similar to that, for example, used in the manufacture of an air-bag.

A second element 48 is provided, the second element 48 being a movable element, which is movable, to a predetermined limited extent, relative to the first element 40. The movable element 48 has a cylindrical outer side-wall 49 of lesser diameter than the peripheral side-wall 42. Formed on the exterior of the side-wall 49 is a radially outwardly directed projection 50 which defines a recess 51. Retained within the recess 51 is a bead 52 provided at the other end of the sleeve 47. Contained within the cylindrical wall 49, at the lower end of the cylindrical wall, is a bell-shaped insert 53, configured to overlie part of the gas generator 43 when the movable element is in a first position, as shown in Figure 12, in which the movable element 48 is contained substantially within the cup-like housing 40. The mouth of the bell-shaped insert 53 is secured to the inner part of the cylindrical wall 49.

The upper-most part of the bell-shaped insert 53 is provided with an upwardly extending projection 54. Connected to the projection 54 is a circular base 55 of a deformable cup-like element 56, the element 56 having a deformable side-wall 57 which, in an initial condition as shown in Figure 12, is deformed to form sinuous or bellows-like folds. The deformable element 56 has the upper part of the side-wall 57 thereof connected, by means of a connecting clip 58, to a closure cap 59 which initially closes the cup-like housing. The closure cap 59 thus has a depending side-wall 60, the depending side-wall 60 terminating with an enlarged lip 61 which is a snap-fitting over the radial projection 44 provided on the side-wall 42 of the first element 40. The cap 59 is provided with an upper part 62 defining a central depressed region 63.

The lifting unit, as so far described, is to be mounted in a motor vehicle beneath the hood or bonnet of the vehicle. The first element 40 may be received within an appropriate recess provided for that purpose within the motor vehicle. A co-operating unit 64 is provided to be mounted on the hood or bonnet. The co-operating unit comprises a housing 65 which contains a depending pin 66, the pin 66 being co-aligned with the depressed region 63 provided in the upper part 62 of the cap 59.

It is to be appreciated that in the initial condition of the lifting unit, the lifting unit is located beneath the co-operating unit 64 and spaced therefrom.

When the lifting unit is deployed gas is generated by the gas generator 43 and is injected into the interior of the bell-like insert 53 contained within the cylindrical wall 49 of the movable element 48. The movable element 48 thus moves upwardly, moving the inflatable sleeve 47 from an initial folded condition, in which the folds of the sleeve lie between the cylindrical outer wall of the movable element 48 and the peripheral side-wall 42 of the first element 40, to an extended position in which the movable element 48 is moved to a predetermined limited extent above the first element 40.

In the initial instance of this movement the cap 62 is moved upwardly to engage with the depending pin 66 of the co-operating element 64. A firm frictional engagement between the cap 62 and the pin 66 is effected. The deformable element 56 is now operatively connected to the motor vehicle.

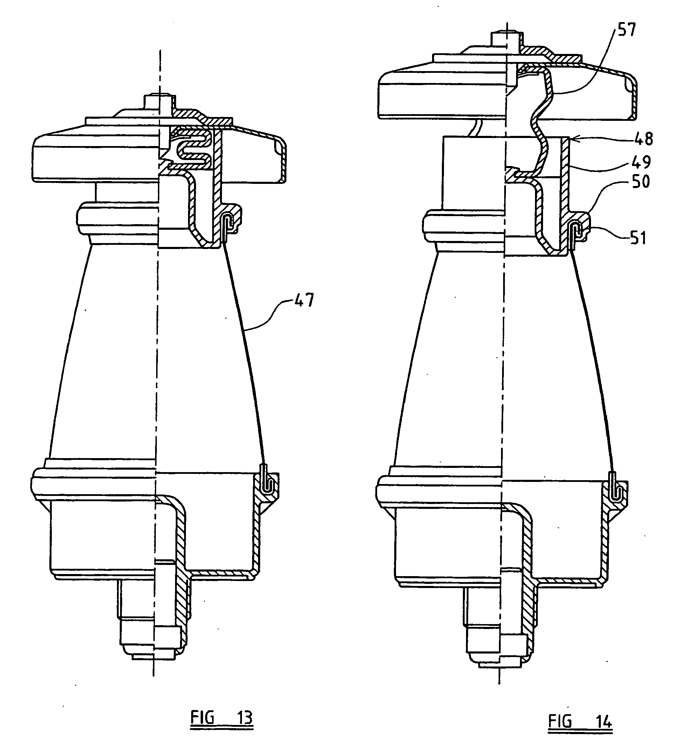

During continued movement the movable element 48, together with the cap 62 move upwardly at the same speed, until the limit of movement of the movable element relative to the first element 40 is achieved when the sleeve 47 becomes taut as shown in Figure 13.

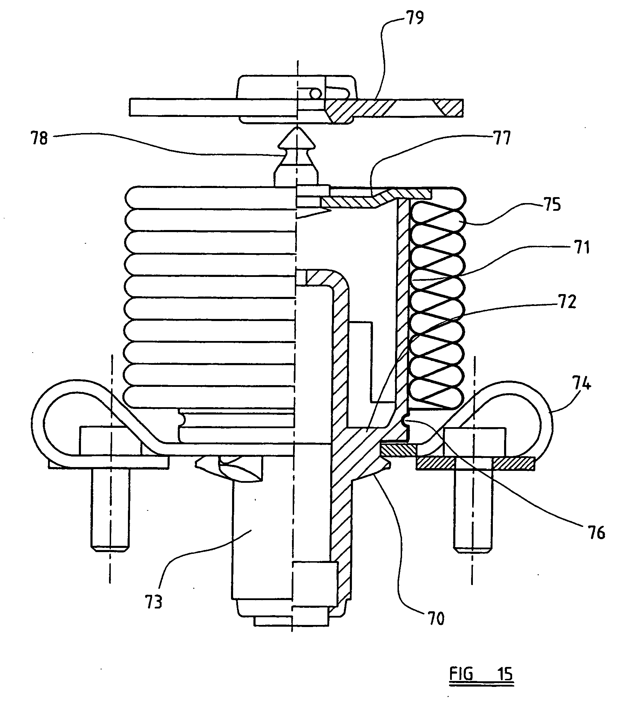

Movement of the movable element 48 is thus terminated but, due to momentum, the cover 62 and the co-operating unit 64 (which is secured to the hood or bonnet of the motor vehicle), continue to move upwardly, plastically deforming the side-wall 57 of the deformable cup-like element 56. Thus the cap 62 moves further upwardly, as shown in Figure 14, relative to the movable element 48, effectively increasing the overall length (height) of the lifting unit. If a very severe downward force is applied to the hood or bonnet whilst the inflatable sleeve 47 remains inflated, the deformable side-wall 57 may further deform, lowering the hood or bonnet, and absorbing energy.

Figures 15 to 17 illustrate yet another embodiment of the invention, but in this embodiment the lifting unit incorporates a bellows. The bellows may be of fabric or may be of plastically deformable metal. In this embodiment a mounting bracket, equivalent to the mounting bracket 5 is utilised.

Referring to the figures a lifting unit comprises a first fixed element 70. The first fixed element 70 has a cylindrical side-wall 71 defining an inner chamber, and a base 72, the base carrying a gas generator 73 which projects into the inner chamber. The first element 70 is mounted, by means of a mounting bracket 74 in position in a motor vehicle. The mounting bracket 74 is directly equivalent to the mounting bracket 5 described above and will not be re-described here. The bracket 74 is operatively positioned between the fixed element 70 and the motor vehicle.

Surrounding the cylindrical wall 71 is a cylindrical bellows 75. The bellows may be formed of fabric or may be formed of metal. The lower end of the bellows is sealed 76 to the outer part of the cylindrical wall 71. The upper end of the bellows 75 is connected to a movable element 77 in the form of a substantially planar disc. The planar disc 77 initially rests on top of the cylindrical side-wall 71. The disc 77 is provided with an upwardly extending centrally located pin 78. The pin is configured to mate engagingly with a co-operating element 79 to be mounted on part of a motor vehicle immediately above the described lifter unit.

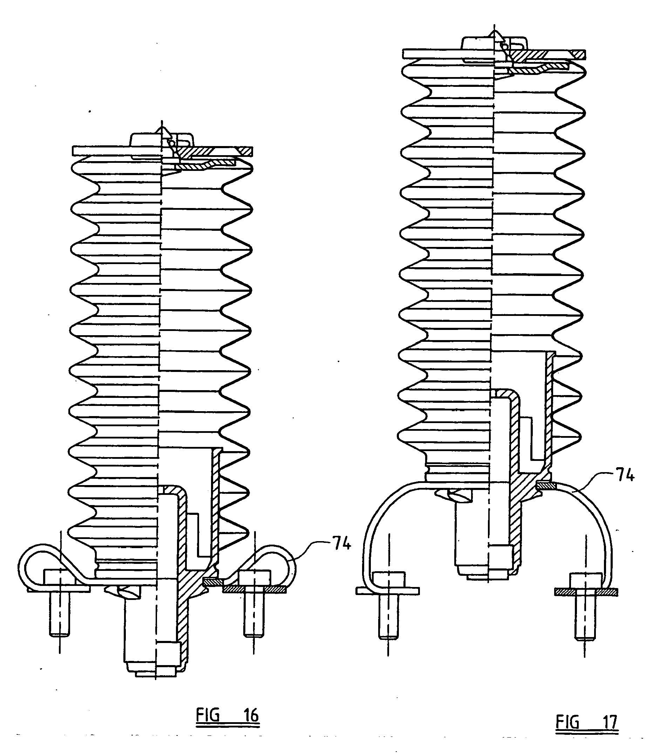

On actuation of the gas generator gas is ejected into the cavity within the cylindrical side-wall 71. The gas serves to lift the movable element 77 upwardly bringing the pin 78 into engagement with the co-operating element 79, whilst simultaneously beginning to expand the bellows 75. The bellows will effect a predetermined limited movement, and when the bellows have expanded to their maximum extent, the illustrated embodiment will have the condition illustrated in Figure 16. On reaching this condition momentum present within the system will be applied to the bracket 74, and the bracket will deform upwardly, thus increasing the effective overall length or overall height of the lifting unit, the bracket 74 finally having the condition shown in Figure 17.

Should a severe downward force be applied to the hood or bonnet the bracket 74 would be able to move downwardly, whilst absorbing energy.

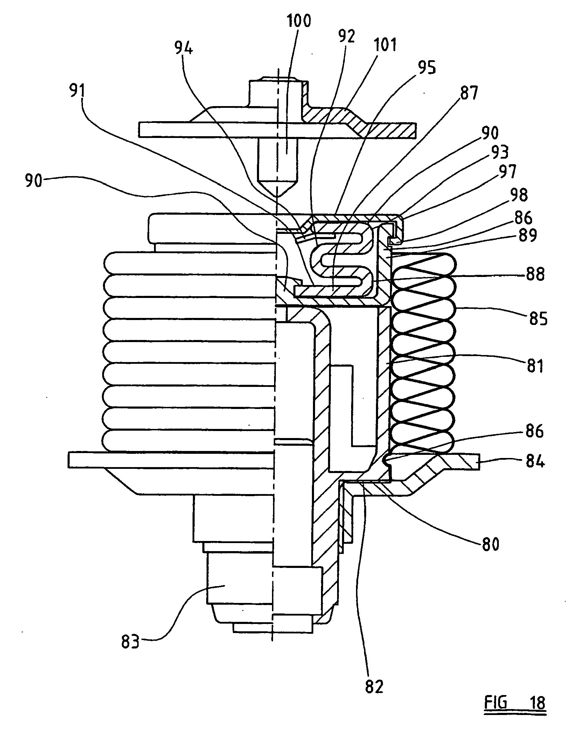

The embodiment of Figures 18 to 20 is similar, in some respects, to the embodiment of Figures 12 to 14 and is similar, in some respects, to the embodiment of Figures 15 to 17.

Referring to the figures, a first fixed element 80 is provided, the element defining a cylindrical side-wall 81 and a base 82. The base 82 carries a gas generator 83 which projects upwardly into a cavity defined by the side-wall 81. The first element 80 is intended to be fixed in position within a motor vehicle and may be received within a mounting cup 84 which, itself, can be secured to the vehicle.

A bellows 85, which may be of fabric, or which may be of metal, surrounds the cylindrical side-wall 81, the lower end of the bellows being sealed, by a seal 86 to a lower part of the cylindrical side-wall 81.

The bellows 85 extend upwardly above the cylindrical side-wall 81, surrounding a second movable element 86 which is of cup-like form having a base 87 and a side-wall 88. The upper-most part of the bellows is sealed by means of a seal 89 to part of the side-wall 88.

A central part of the base of the movable element 86 is provided with an upstanding projection 90. The projection 90 engages the base 91 of a cup-shaped deformable element 92, the deformable element 92 having a deformable side-wall 93 which is shown initially in a concertina folded condition. The folded side-wall 93 is connected, by means of a connecting clip 94 to a covering cap 95, the covering cap 95 having a planar upper part 96 surrounded by a depending side-wall 97, the depending side-wall 97 having, at its lower end, a bead 98 which forms a snap-fastening with a recess provided for that purpose on the side-wall 86 of the second movable element.

The cap is provided with a central depressed region 99 which is to receive a pin 100 of a co-operating element 101, similar to that of Figure 12.

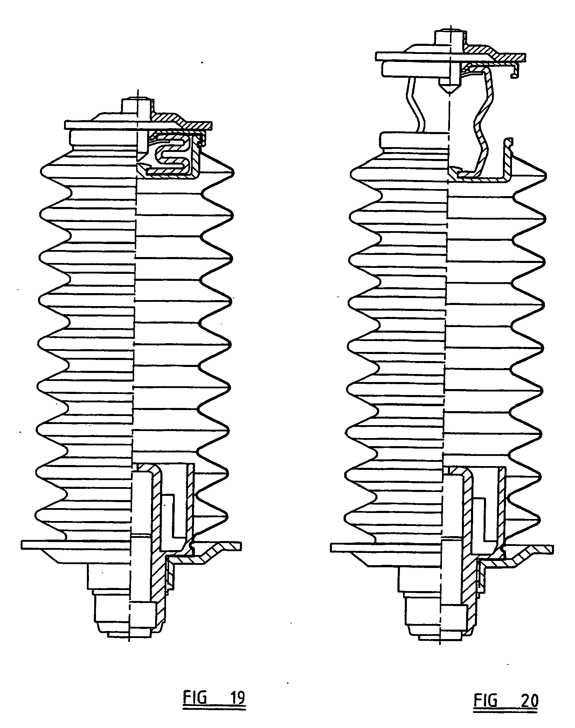

On actuation of the lifting unit shown in Figure 18 gas from the gas generator is injected into the cavity defmed by the side-wall 81, causing the movable element 86 to be moved upwardly, extending the bellows 85. The movable element 86 will move upwardly to the limit of movement defined by the bellows. When the bellows prevent further upward movement of the movable element 86, due to momentum the deformable side-wall 93 of the deformable element 92 will deform, permitting the co-operating unit 101 to move further upwardly to the position shown in Figure 20. Again the deformable element may be deformed downwardly if a sufficiently large force is applied to the hood or bonnet lifted by the lifting unit.

In the present Specification "comprises" means "includes or consists of" and "comprising" means "including or consisting of".

The features disclosed in the foregoing description, or the following Claims, or the accompanying drawings, expressed in their specific forms or in terms of a means for performing the disclosed function, or a method or process for attaining the disclosed result, as appropriate, may in any disclosed combination of such features, be utilised for realising the invention in diverse forms thereof.

## Claims

1. A safety arrangement, the safety arrangement incorporating a lifting unit (1), the lifting unit (1) including a first element (2) to be mounted in position in a motor vehicle and a second element (3), movable to a predetermined limited extent relative to the first element (2) to increase the overall length of the lifting unit (1), whereby one of said elements (2,3) is associated with a deformable member (5) to be operatively positioned between the said one of the elements (2,3) and part of the vehicle, **characterised in that**, in use, the momentum gained by the second element (3) during its movement towards said limited extent is applied to the deformable member (5) when the second element (3) meets the limit of its movement to deform the member (5) and hence increase the overall length of the lifting unit (1).

2. A safety arrangement according to Claim 1 wherein the first element (2) is engaged by a mounting bracket (5) to mount the unit (1) in position, the mounting bracket (5) being the deformable element and being formed at least partly of a deformable material such that, in use, the momentum causes the mounting bracket (5) to deform.

3. An arrangement according to Claim 2 wherein the mounting bracket (5) is formed of a deformable metal and includes an initially planar region (6) to which the first element (2) is fixed, and two lugs (8,9) at opposed ends of that planar region, the lugs being provided with mounting apertures (12,13) or recesses to mount the bracket (5) in position, part of the mounting bracket adjacent the lugs being deformable.

4. An arrangement according to Claim 3 wherein the mounting bracket has an initial planar portion (6) of generally rectangular form, the lugs (8,9) being provided at opposed ends of the rectangular planar portion (6) and folded to lie under the rectangular planar portion (6), parts (10, 11) of the rectangular planar portion (6) overlying the lugs (8,9) being cut-away to provided access to the mounting apertures (12,13) or recesses provided in the lugs (8,9).

5. A safety arrangement according to Claim 1 wherein the deformable member (5) is mounted to the second element (48), between the second element (48) and a cap (59), there being a co-operating unit (64) to be mounted on the vehicle, the cap (59) and co-operating unit (64) being engageable on actuation of the safety arrangement.

6. A safety arrangement according to Claim 5 wherein the deformable element (56) is in the form of a cup-shaped element, the side-wall (57) of the cup-shaped element being a deformable side-wall (57).

7. An arrangement according to any one of the preceding Claims wherein the first element (2) is an outer cylinder and the second element (3) is a piston element movable relative to the cylinder.

8. An arrangement according to Claim 7 wherein the second element (3) may tilt relative to the first element (2) when the second element (3) has moved relative to the first element (2).

9. An arrangement according to any one of Claims 1 to 6 wherein the second element (48) is connected to the first element by means of an inflatable sleeve (47).

10. An arrangement according to any one of Claims 1 to 6 wherein the second element (77) is connected to the first element (70) by means of an inflatable bellows (75).

## Patentansprüche

1. Sicherheitseinrichtung, wobei die Sicherheitseinrichtung eine Hebeeinheit (1) aufweist, wobei die Hebeeinheit (1) ein erstes Element (2), das an einem Ort in einem Motorfahrzeug zu befestigen ist, und ein zweites Element (3), das in einem vorbestimmten begrenzten Ausmaß relativ zu dem ersten Element (2) bewegbar ist, um die Gesamtlänge der Hebeeinheit (1) zu erhöhen, aufweist, und wobei eines der genannten Elemente (2, 3) mit einem deformierbaren Element (5) verbunden ist, das wirkungsmäßig zwischen dem einen der genannten Elemente (2, 3) und einem Teil des Fahrzeugs anzuordnen ist, **dadurch gekennzeichnet, daß** während der Verwendung der von dem zweiten Element (3) erreichte Impuls während dessen Bewegung in Richtung des begrenzten Ausmaßes auf das deformierbare Element (5) einwirkt, wenn das zweite Element (3) die Grenze seiner Bewegung erreicht, um das Element (5) zu verformen und dadurch die Gesamtlänge der Hebeeinheit (1) zu erhöhen.

2. Sicherheitseinrichtung nach Anspruch 1, **dadurch gekennzeichnet, daß** das erste Element (2) mit einem Montagearm (5) in Eingriff steht, um die Einheit (1) an ihrem Ort zu befestigen, der Montagearm (5) das deformierbare Element ist und mindestens abschnittsweise aus einem deformierbaren Material besteht, so daß während der Verwendung der Impuls eine Deformierung des Montagearms (5) bewirkt.

3. Einrichtung nach Anspruch 2, **dadurch gekennzeichnet, daß** der Montagearm (5) aus einem deformierbaren Metall gebildet ist und einen im Ausgangszustand ebenen Bereich (6) aufweist, an dem das erste Element (2) befestigt ist, und zwei Laschen (8, 9) an gegenüberliegenden Enden dieses ebenen Bereichs, wobei die Laschen mit Montageöffnungen (12, 13) oder Vertiefungen versehen sind, um den Arm (5) an seinem Ort zu befestigen, wobei ein Abschnitt des Montagearms benachbart zu den Laschen deformierbar ist.

4. Einrichtung nach Anspruch 3, **dadurch gekennzeichnet, daß** der Montagearm einen im Ausgangszustand ebenen Abschnitt (6) von im wesentlichen rechtwinkliger Form aufweist, wobei die Laschen (8, 9) an gegenüberliegenden Enden des rechtwinkligen ebenen Abschnitts (6) vorgesehen sind und gefaltet sind, um unter dem rechtwinkligen ebenen Abschnitt (6) zu liegen, wobei Teile (10, 11) des rechtwinkligen ebenen Abschnitts (6), die über den Laschen (8, 9) liegen, ausgeschnitten sind, um einen Zugang zu den Montageöffnungen (12, 13) oder Vertiefungen, die über den Laschen (8, 9) vorgesehen sind, bereitzustellen.

5. Sicherheitseinrichtung nach Anspruch 1, **dadurch gekennzeichnet, daß** das deformierbare Element (5) an dem zweiten Element (48) gehalten ist, wobei zwischen dem zweiten Element (48) und einer Kappe (59) eine Mitwirkungseinheit (64) angeordnet ist, die auf dem Fahrzeug anzubringen ist, wobei die Kappe (59) und die Mitwirkungseinheit (64) bei Betätigung der Sicherheitseinrichtung miteinander in Eingriff bringbar sind.

6. Sicherheitseinrichtung nach Anspruch 5, **dadurch gekennzeichnet, daß** das deformierbare Element (56) die Form eines tassenförmigen Elements aufweist, wobei die Seitenwand (57) des tassenförmigen Elements eine deformierbare Seitenwand (57) ist.

7. Einrichtung nach einem der vorangehenden Ansprüche, **dadurch gekennzeichnet, daß** das erste Element (2) ein äußerer Zylinder und das zweite Element (3) ein Kolbenelement ist, das relativ zu dem Zylinder bewegbar ist.

8. Einrichtung nach Anspruch 7, **dadurch gekennzeichnet, daß** sich das zweite Element (3) relativ zu dem ersten Element (2) neigen kann, wenn sich das zweite Element (3) relativ zu dem ersten Element (2) bewegt hat.

9. Einrichtung nach einem der Ansprüche 1 bis 6, **dadurch gekennzeichnet, daß** das zweite Element (48) mit dem ersten Element mittels einer aufblasbaren Manschette (47) verbunden ist.

10. Einrichtung nach einem der Ansprüche 1 bis 6, **dadurch gekennzeichnet, daß** das zweite Element (77) mit dem ersten Element (70) mittels eines aufblasbaren Faltenbalgs (75) verbunden ist.

## Revendications

1. Agencement de sécurité, l'agencement de sécurité incorporant un module d'élévation (1), le module d'élévation (1) incluant un premier élément (2) à monter en position dans un véhicule à moteur et un second élément. (3), mobile dans une mesure prédéterminée limitée par rapport au premier élément (2) dans le but d'augmenter la longueur hors tout du module d'élévation (1), ce par quoi l'un desdits éléments (2, 3) est associé avec un élément déformable (5) à positionner de manière fonctionnelle entre ledit un des éléments (2, 3) et une partie du véhicule, **caractérisé en ce que**, en utilisation, la quantité de mouvement obtenue par le second élément (3) pendant son déplacement dans ladite mesure limitée est appliquée à l'élément déformable (5) lorsque le second élément (3) atteint sa limite de fin de course pour déformer l'élément (5) et augmenter de ce fait la longueur hors tout du module d'élévation (1).

2. Agencement de sécurité selon la revendication 1, dans lequel un support de montage (5) engage le premier élément (2) dans le but de monter le module (1) en position, le support de montage (5) étant l'élément déformable et étant formé au moins partiellement d'un matériau déformable faisant que, en utilisation, la quantité de mouvement provoque une déformation du support de montage (5).

3. Agencement selon la revendication 2, dans lequel le support de montage (5) est formé d'un matériau déformable et inclut une région initialement plane (6) à laquelle est fixé le premier élément (2), et deux pattes (8, 9) situées aux extrémités opposées de cette région plane, les pattes étant pourvu d'ouvertures de montage (12, 13), ou évidements, servant à monter le support (5) en position, une partie du support de montage qui est adjacente aux pattes étant déformable.

4. Agencement selon la revendication 3, dans lequel le support de montage comporte une partie initialement plane (6) de forme globalement rectangulaire, les pattes (8, 9) étant disposées aux extrémités opposées de la partie plane rectangulaire (6) et étant pliées de façon à se trouver sous la partie rectangulaire plane (6), des parties (10, 11) de la partie rectangulaire plane (6) qui recouvrent les pattes (8, 9) étant découpées pour permettre un accès aux ouvertures de montage (12, 13), ou évidements, réalisés dans les pattes (8, 9).

5. Agencement de sécurité selon la revendication 1, dans lequel l'élément déformable (5) est monté sur le second élément (48), entre le second élément (48) et un chapeau (59), un module coopérant (64) à monter sur le véhicule étant situé à cet endroit, le chapeau (59) et le module coopérant (64) pouvant engager lors d'une activation de l'agencement de sécurité.

6. Agencement de sécurité selon la revendication 5, dans lequel l'élément déformable (56) a la forme d'un élément en forme de coupelle, la paroi latérale (57) de l'élément en forme de coupelle étant une paroi latérale déformable (57).

7. Agencement selon l'une quelconque des revendications précédentes, dans lequel le premier élément (2) est un cylindre extérieur et le second élément (3) est un élément de piston mobile par rapport au cylindre.

8. Agencement selon la revendication 7, dans lequel le second élément (3) peut s'incliner par rapport au premier élément (2) lorsque le second élément (3) a bougé par rapport au premier élément (2).

9. Agencement selon l'une quelconque des revendications 1 à 6, dans lequel le second élément (48) est lié au premier élément au moyen d'un manchon gonflable (47).

10. Agencement selon l'une quelconque des revendications 1 à 6, dans lequel le second élément (77) est lié au premier élément (70) au moyen d'un soufflet gonflable (75).
